# EUROPÄISCHE PATENTANMELDUNG

(11) **EP 2 407 594 A2**
(43) Veröffentlichungstag der Anmeldung: **18.01.2012**
(21) Anmeldenummer: 11173977.7
(22) Anmeldetag: 14.07.2011
(51) Int. Cl.: E01C 9/00, E01C 9/08

(54) **Mobile Fahrbahneinheit für Zweiräder**

(30) Priorität: 16.07.2010 DE 102010031491
(71) Anmelder: Neupert, Hannes, 07922 Tanna (DE)
(72) Erfinder: Neupert, Hannes, 07922 Tanna (DE); Burger, Michael, 01099 Dresden (DE)
(74) Vertreter: Wenzel & Kalkoff

(57) **Zusammenfassung**

Die Erfindung betrifft eine mobile Fahrbahneinheit (1, 1') für Zweiräder mit mindestens einer Grundeinheit (2) mit einer Fahrbahnfläche (7). Um einen leichten Transport und einen einfachen Aufbau zu ermöglichen, ist eine erste (8a) und einer zweite (8b) mit der Grundeinheit (2) verbundene Rampenanordnung mit jeweils mindestens einer Rampenfläche vorgesehen, wobei die erste (8a) und die zweite Rampenanordnung (8b) von einer Transportposition in eine Gebrauchsposition verstellbar ist und wobei in der Gebrauchsposition die Rampenflächen und die Fahrbahnfläche (7) eine befahrbare Bahn bilden.

## Beschreibung

Die Erfindung betrifft eine mobile Fahrbahneinheit für Zweiräder.

Fahrbahnen für Zweiräder, wie bspw. Fahrräder und insbesondere Elektrofahrräder, Pedelecs (Pedal Electric Cycles), Elektroroller und Elektromofas werden bspw. für Wettkampfveranstaltungen genutzt, um einen bspw. schleifenartig zu durchfahrenden Parcours zu bilden. In gleicher Weise werden entsprechende Fahrbahnen bei Präsentationsveranstaltungen für Fahrzeuge eingesetzt, um potenziellen Käufern bzw. Interessenten einen Test der Fahrzeuge zu ermöglichen.

Übliche transportable Fahrbahnen bestehen aus mehreren Fahrbahnelementen, die nebeneinander aufgestellt und dann miteinander verbunden werden. Ein entsprechender Parcours, wie u. a. ein Testparcours, entsteht bspw. durch Aneinanderreihung mehrerer Fahrbahnelemente. Nachteilig an derartigen Fahrbahnen aus dem Stand der Technik ist, dass die Montage manuell erfolgt, was zeit- und kostenintensiv ist.

Es besteht daher die Aufgabe, eine Fahrbahneinheit für Zweiräder zu schaffen, die leicht transportabel ist und mit geringem Aufwand an dem jeweiligen Veranstaltungsort aufgebaut werden kann.

Die Aufgabe wird gelöst durch eine mobile Fahrbahn für Zweiräder gemäß Anspruch 1.

Die mobile Fahrbahneinheit weist erfindungsgemäß mindestens eine Grundeinheit mit mindestens einer Fahrbahnfläche und eine erste sowie eine zweite mit der Grundeinheit verbundene Rampenanordnung auf. Die Rampenanordnungen weisen jeweils mindestens eine Rampenfläche auf und sind von einer Transportposition in eine Gebrauchsposition verstellbar.

Die Erfindung erlaubt somit einen leichten Transport der Fahrbahneinheit in der Transportposition, wobei durch die Verstellbarkeit in die Gebrauchsposition ein leichter und schneller Aufbau der Fahrbahneinheit ermöglicht ist.

In der Gebrauchsposition bilden die Rampenflächen und die Fahrbahnfläche eine befahrbare Bahn bzw. Fahrbahn. Somit lässt sich bspw. eine Teststrecke für Zweiräder leicht bilden. Ein längerer Parcours kann bspw. durch aneinanderreihen mehrerer Fahrbahneinheiten oder in Kombination mit einer auf einer Asphaltfläche begrenzten Fahrstrecke gebildet werden.

Die Fahrbahnfläche der Grundeinheit und die Rampenflächen der ersten und zweiten Rampenanordnung sind mindestens in der Gebrauchsposition befahrbar ausgebildet, wobei im Rahmen der vorliegenden Erfindung unter dem Begriff "befahrbar" die grundsätzliche Ausbildung des jeweiligen Bauteils verstanden wird, aufgrund der Geometrie und Konstruktion ein Befahren mit einem Zweirad, wie bspw. einem Fahrrad oder einem Elektroroller, zu ermöglichen.

Unter einem Zweirad werden im Folgenden ein- oder mehrspurige Fahrzeuge, wie insbesondere Fahrräder, Roller, Elektrofahrräder, Pedelecs (Pedal Electric Cycles), E-Bikes und Elekroroller verstanden.

Die Grundeinheit und die erste und die zweite Rampenanordnung sollten naturgemäß darüber hinaus so ausgebildet sein, dass die Fahrbahneinheit in der Transportposition leicht transportierbar ist. Somit sollte die Grundeinheit als auch die Rampenanordnungen ein möglichst geringes Gewicht aufweisen und auch hinsichtlich der Abmessungen ein leichtes Transportieren der Fahrbahneinheit erlauben. Bevorzugt sind Grundeinheit und erste und zweite Rampeneinheit daher aus Aluminium bzw. einer Kombination aus Aluminium mit einem Stahlrahmen gebildet.

Die genaue Geometrie der Fahrbahnfläche und der Rampenflächen kann an die jeweilige Anwendung angepasst sein, wobei eine längliche Form bevorzugt ist. Insbesondere bevorzugt sind Fahrbahnfläche und Rampenflächen im Wesentlichen rechteckig ausgebildet, wobei die Länge der Flächen in Fahrrichtung größer ist als die Breite. Unter der Fahrrichtung wird hierbei die bevorzugte Richtung der späteren Benutzung der Bahn mit einem Zweirad verstanden. Zweckmäßig entspricht die Fahrrichtung der Längsachse der Grundeinheit.

Alternativ oder ergänzend können die Fahrbahnfläche und/oder die Rampenflächen gekrümmt, d. h. mit mindestens einem Radius ausgebildet sein, so dass durch ein Aneinanderreihen mehrerer mobiler Fahrbahneinheiten leicht ein Rundparcours gebildet werden kann.

Die Fahrbahnfläche kann grundsätzlich eben und, bezogen auf die Gebrauchsposition horizontal ausgebildet sein. Bevorzugt ist die Fahrbahnfläche uneben, d.h. die Fahrbahnfläche weist mindestens zwei Abschnitte auf, die in der Gebrauchsposition mit der Horizontalen unterschiedliche Winkel einschließen. Die Fahrbahnfläche kann somit ein vertikales Höhenprofil aufweisen, wodurch bspw. ein Test eines Zweirades bei verschiedenen Steigungs- bzw. Gefällewinkeln möglich ist. Im Rahmen von Wettkampfveranstaltungen kann somit ferner der Schwierigkeitsgrad erhöht werden.

Hinsichtlich des Oberflächenbelags der Fahrbahnfläche und der Rampenflächen kommen sämtliche Materialien in Betracht, die das Befahren mit einem Zweirad erlauben. Bevorzugt sind solche Materialien, die eine ausreichende Haftung der Reifen auf der Oberfläche sicherstellen. Insbesondere bevorzugt sind die Fahrbahnflächen und die Rampenflächen mindestens abschnittsweise zweckmäßig vollständig besandet ausgeführt. Zweckmäßig weisen die Fahrbahnfläche und die Rampenflächen unterschiedliche Oberflächebeläge auf, so dass für den eingangs erwähnten Test eines Zweirades unterschiedliche Fahrbahnbedingungen zur Verfügung stehen.

Die erste und die zweite Rampenanordnung sind erfindungsgemäß, wie Eingangs diskutiert, von der Transportposition in die Gebrauchsposition verstellbar. Die Verstellung kann in jeder geeigneten Weise erfolgen, wobei bevorzugt die erste und die zweite Rampenanordnung über ein oder mehrere entsprechende Gelenke mit der Grundeinheit dauerhaft verbunden und von der Transportposition in die Gebrauchsposition verschwenkbar oder verschiebbar ausgebildet sind. Hierzu kann ein motorischer Antrieb vorgesehen sein, alternativ oder ergänzend kann die Verstellung auch manuell, bspw. über ein oder mehrere Betätigungs- bzw. Seilzüge erfolgen.

Naturgemäß können sowohl die Grundeinheit als auch die Rampenanordnungen weitere Baugruppen aufweisen, wie bspw. Überdachungen oder Bandenelemente. Ebenso kann die erste und/oder die zweite Rampenanordnung ein- oder mehrteilig ausgebildet sein.

Zum Transport der mobilen Fahrbahneinheit kann die Grundeinheit bspw. Griffe für einen manuellen Transport und/oder Aufnahmen für die Gabeln eines Gabelstaplers aufweisen, so dass am jeweiligen Veranstaltungsort die mobile Fahrbahneinheit leicht von einem Transportfahrzeug an den gewünschten Standort gebracht werden kann. Nach einer bevorzugten Weiterbildung der Erfindung ist die Grundeinheit rollbar bzw. fahrbar ausgebildet. Hierdurch kann die Positionierung ohne zusätzliche Hilfsmittel leicht manuell erfolgen. Die Grundeinheit kann hierzu mehrere Rollen oder Räder bzw. Radanordnungen aufweisen, die bevorzugt in vertikaler Richtung unterhalb der Fahrbahnfläche angeordnet sind. Hierdurch ist eine besonders kompakte Bauform gegeben.

Insbesondere bevorzugt ist die Grundeinheit als Anhänger zur Verbindung mit einem Zugfahrzeug ausgebildet. Die Mobilität der Fahrbahneinheit wird hierdurch nochmals erhöht. Die Grundeinheit kann hierbei bevorzugt integral mit einer Deichsel und einer entsprechenden Kupplung, wie bspw. einer üblichen Kugelpfanne bzw. einer Kupplungsöse ausgebildet sein. Zweckmäßig ist die Grundeinheit integral mit einem Fahrwerk mit mindestens zwei Achsen, insbesondere als Drehschemelanhänger ausgebildet.

Bevorzugt sind die erste und die zweite Rampenanordnung entlang einer Längsachse der Grundeinheit gegenüberliegend an der Fahrbahnfläche angeordnet. Eine der Rampenanordnungen kann somit bspw. in einem Testparcours- in Fahrrichtung - als Auffahrrampe und die jeweilige andere Rampenanordnung als Abfahrrampe dienen. Es versteht sich von selbst, dass die Rampenflächen in der Gebrauchsposition derart mit der Grundeinheit verbunden sind, dass in den Übergangsbereichen von Fahrbahnfläche zu den Rampenflächen keine gravierenden Höhenunterschiede vorhanden sind, die naturgemäß leicht zu Stürzen der Benutzer führen könnten.

Gemäß einer bevorzugten Weiterbildung sind die erste und/oder die zweite Rampenanordnung jeweils über eine Drehgelenkanordnung mit der Grundeinheit verbunden. Der Aufbau der mobilen Fahrbahneinheit kann somit besonders leicht erfolgen.

Bevorzugt ist die erste und/oder die zweite Rampenanordnung um eine erste, zur Längsachse der Grundeinheit senkrechte Drehachse von der Transportposition in die Gebrauchsposition schwenkbar. Hierdurch können die Rampenanordnungen einerseits in die Transportposition vertikal verschwenkt werden, was für den Transport besonders platzsparend ist. Andererseits können die Rampenanordnungen in der Gebrauchsposition entsprechend so ausgerichtet werden, dass etwaige Höhenunterschiede zwischen der Fahrbahnfläche und der Umgebung, wie bspw. dem jeweiligen Bodenniveau, bzw. benachbarte Fahrbahneinheiten ausgeglichen sind. Insbesondere bevorzugt ist die Drehachse in der Gebrauchsposition im Wesentlichen horizontal ausgerichtet.

Nach einer bevorzugten Weiterbildung der Erfindung weist die erste und/oder die zweite Rampenanordnung mindestens einen inneren und einen äußeren Rampenabschnitt auf. Der innere Rampenabschnitt ist verstellbar mit der Grundeinheit und der äußere Rampenabschnitt verstellbar mit dem inneren Rampenabschnitt verbunden. Die mehrteilige Ausbildung der Rampenanordnung erlaubt eine besonders kompakte Anordnung der Rampen in der Transportposition und damit eine nochmals verbesserte Handhabbarkeit der mobilen Fahrbahneinheit.

Zweckmäßig entspricht die Länge des äußeren Rampenabschnitts in Fahrrichtung im Wesentlichen der Hälfte der Länge der Fahrbahnfläche, bzw. im Falle, dass die Fahrbahnfläche uneben ist, der horizontalen Projektion der Erstreckung der Fahrbahnfläche in Fahrrichtung.

Die einzelnen Rampenabschnitte können hierbei bspw. verschwenkbar oder verschiebbar mittels geeigneter Dreh- und/oder Schubgelenke miteinander bzw. mit der Grundeinheit verbunden sein. Zweckmäßig ist der äußere Rampenabschnitt hierbei um eine zweite Drehachse schwenkbar, wobei die zweite Drehachse parallel zur ersten Drehachse ausgerichtet ist. Die Rampenanordnungen sind somit vorteilhaft "faltbar", was die Abmessungen in der Transportposition insbesondere bei relativ langen Rampenelementen weiter erhöht. Die Rampenelemente können hierzu in der Transportposition bspw. vertikal angeordnet sein.

Bevorzugt weist der innere Rampenabschnitt eine innere Rampenfläche und der äußere Rampenabschnitt eine äußere Rampenfläche auf. Besonders bevorzugt ist die Rampenanordnung derart ausgebildet, dass in der Transportposition die innere Rampenfläche im Wesentlichen vertikal und die äußere Rampenfläche im Wesentlichen horizontal angeordnet ist, so dass zwischen der Fahrbahnfläche und den Rampenflächen ein Transportraum gebildet ist. Die innere Rampenfläche kann somit in der Transportposition einen seitlichen Abschluss der Fahrbahneinheit bilden, während die äußere Rampenfläche ein horizontal von der Fahrbahnfläche beabstandetes Dachelement bilden kann.

Vorteilhaft entsteht somit in der Transportposition ein Transportraum, welcher zur Lagerung bzw. für den Transport von einem oder mehreren Zweirädern nutzbar ist. Die Größe dieses Transportraumes hängt naturgemäß von den Abmessungen der beiden Rampenflächen ab, da diese den Transportraum - zusammen mit der Fahrbahnfläche - begrenzen. Für den Transport von Zweirädern sollten die Abmessungen der Rampenflächen bevorzugt entsprechend gewählt sein.

Die vorliegende bevorzugte Ausführungsform ist insbesondere bei der Ausbildung der Fahrbahneinheit als Anhänger vorteilhaft, da somit das Innere des Anhängers auch bei längeren Transportzeiten als Stau-/Lagerraum zur Verfügung steht. Hierbei bilden die inneren Rampenflächen der beiden Rampenanordnungen eine erste und zweite Seiten- bzw. Bordwand des Anhängers, während die äußeren Rampenflächen eine Dachanordnung bilden. Die Anordnung der äußeren Rampenabschnitte als Dach schützt die Fahrbahneinheit vorteilhaft vor Witterungseinflüssen.

Bevorzugt weist die Grundeinheit, insbesondere bei der Ausbildung als Anhänger, eine Stromversorgung auf. Hierzu kann die Grundeinheit bspw. einen Generator aufweisen, oder aber zur Verbindung mit einem Strom- bzw. Versorgungsnetz, bspw. eines Zugfahrzeugs, ausgebildet sein. Insbesondere bevorzugt weist die Grundeinheit mindestens einen mit einem Elektrofahrzeug verbindbaren Steckverbinder auf. Hierdurch kann ein im Transportraum vorhandenes Fahrzeug, bspw. beim Transport, aufgeladen werden.

Zweckmäßig weist die Grundeinheit und/oder die Rampenanordnung mindestens ein Absperrelement auf, welches sich im Wesentlichen senkrecht zu der Fahrbahnfläche bzw. der Rampenfläche erstreckt und die befahrbare Bahn mindestens teilweise seitlich, d.h. parallel zur Fahrrichtung, begrenzt. Die Fahrbahn- bzw. Rampenfläche ist somit an mindestens einem seitlichen Ende begrenzt.

Die vorliegende Ausbildung erhöht die Sicherheit der Fahrbahneinheit in der Gebrauchsposition in vorteilhafter Weise, da ein versehentliches Verlassen der Fahrbahn, bspw. wenn ein Benutzer die Kontrolle über das Zweirad verliert, vermieden wird. Das Absperrelement sollte hierzu so ausgelegt sein, dass es auch die bei einem etwaigen Sturz oder Unfall die auftretenden Kräfte sicher aufnimmt. Hierzu kann das mindestens eine Absperrelement bspw. flächig ausgebildet sein oder aber mindestens eine als Handlauf ausgebildete Abschlussleiste aufweisen, die über eine oder mehrere Stützen mit der Grundeinheit bzw. der jeweiligen Rampenanordnung verbunden ist. Das Absperrelement sollte so ausgebildet sein, dass eine Brüstungshöhe von mindestens 90 cm, bevorzugt zwischen 95-100 cm, gegeben ist.

Bevorzugt weist sowohl die Grundeinheit als auch die Rampenanordnungen jeweils mindestens ein Absperrelement auf. Insbesondere bevorzugt sind zwei Absperrelemente vorgesehen, die im Abstand voneinander angeordnet die befahrbare Bahn beidseitig begrenzen. Die Fahrbahn- bzw. Rampenfläche ist somit an beiden, quer zur Fahrrichtung angeordneten Enden begrenzt, wodurch die Sicherheit der mobilen Fahrbahneinheit weiter erhöht wird. Die Grundeinheit bzw. die Rampenanordnungen sind somit U-förmig ausgebildet.

Damit insbesondere bei der Ausführung der mobilen Fahrbahneinheit als Anhänger eine kompakte Ausbildung in der Transportposition möglich ist, sollte der Abstand der Absperrelemente der Grundeinheit zueinander, d.h. quer zur Fahrrichtung, sich von dem entsprechenden Abstand der Absperrelemente der Rampenanordnungen unterscheiden. Beim Verschwenken der Rampenanordnungen aus der Gebrauchsposition in eine vertikale Transportposition gleiten die Absperrelemente der Rampenanordnungen somit an den Absperrelementen der Grundeinheit seitlich vorbei, so dass eine "verschachtelte" Anordnung möglich ist.

Im Falle der Ausbildung der Rampenelemente mit mehreren Rampenabschnitten, wie eingangs beschrieben, sollte naturgemäß auch der Abstand der am inneren Rampenabschnitt angeordneten inneren Absperrelemente zueinander sich vom Abstand der am äußeren Rampenabschnitt angeordneten äußeren Absperrelemente unterscheiden. Zweckmäßig ist hierbei der Abstand der äußeren Absperrelemente zueinander größer als der Abstand der inneren Absperrelemente. Der Abstand der inneren Absperrelemente ist insbesondere bevorzugt größer als der Abstand der Absperrelemente der Grundeinheit. Hierbei ist besonders vorteilhaft, dass in der Transportposition die Absperrelemente den Transportraum seitlich begrenzen bzw. abschließen und somit im Falle der Ausbildung als Anhänger entsprechende gegenüberliegende Seiten- bzw. Bordwände bilden.

Wie bereits eingangs beschrieben, kann die Betätigung der Rampenanordnungen bspw. manuell erfolgen. Nach einer bevorzugten Weiterbildung der Erfindung ist mindestens ein Antrieb für die Rampenanordnungen vorgesehen. Der Antrieb kann bspw. elektrisch, hydraulisch oder pneumatisch ausgebildet sein und eine gemeinsame oder aber getrennte Verstellung der Rampenanordnungen erlauben. Zweckmäßig ist ein hydraulischer Antrieb mit einem Hydraulikaggregat in der Grundeinheit vorgesehen, der über entsprechend den Rampenanordnungen bzw. -abschnitten zugeordnete Hydraulikzylinder eine Verstellung der Rampenanordnungen erlaubt. Bevorzugt ist eine Steuerungseinheit vorgesehen, welche derart ausgebildet ist, um das Hydraulikaggregat und entsprechend zwischen Aggregat und den Hydraulikzylindern vorgesehene Ventile steuert, um die Rampenanordnungen aus der Transportposition in die Gebrauchsposition zu verstellen. Die Verstellung ist somit in einfacher Weise auf "Knopfdruck", bspw. mittels einer entsprechenden Fernbedienung möglich.

Die Erfindung wird nachstehend anhand von Ausführungsbeispielen erläutert. Es zeigt:
- Fig. 1a: eine schematische und perspektivische Ansicht eines Ausführungsbeispiels der erfindungsgemäßen mobilen Fahrbahneinheit in der Gebrauchsposition,
- Fig. 1b: das Ausführungsbeispiel einer mobilen Fahrbahneinheit gemäß Fig. 1a in einer Draufsicht,
- Fig. 2: das Ausführungsbeispiel einer mobilen Fahrbahneinheit gemäß Fig. 1a in einer zweiten Position,
- Fig. 3: das Ausführungsbeispiel einer mobilen Fahrbahneinheit gemäß Fig. 1 in einer dritten Position,
- Fig. 4a: das Ausführungsbeispiel einer mobilen Fahrbahneinheit gemäß Fig. 1 in der Transportposition,
- Fig. 4b: eine Frontansicht des Ausführungsbeispiels gemäß Fig. 4a,
- Fig. 4c: eine Schnittansicht des Ausführungsbeispiels gemäß Fig. 4a entlang der Linie A-A' aus Fig. 4b und
- Fig. 5a - 5c: ein zweites Ausführungsbeispiel einer erfindungsgemäßen Fahrbahneinheit in einer schematischen Seitenansicht.

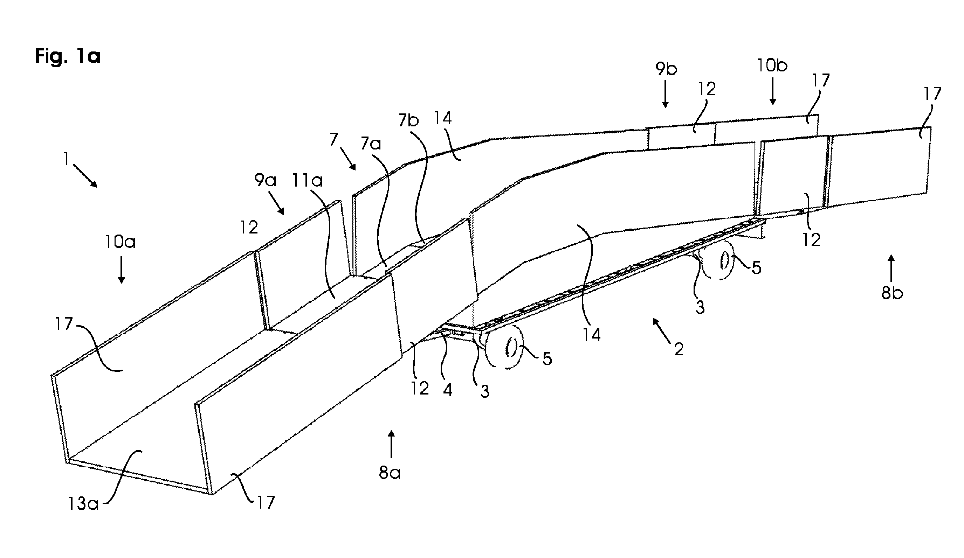

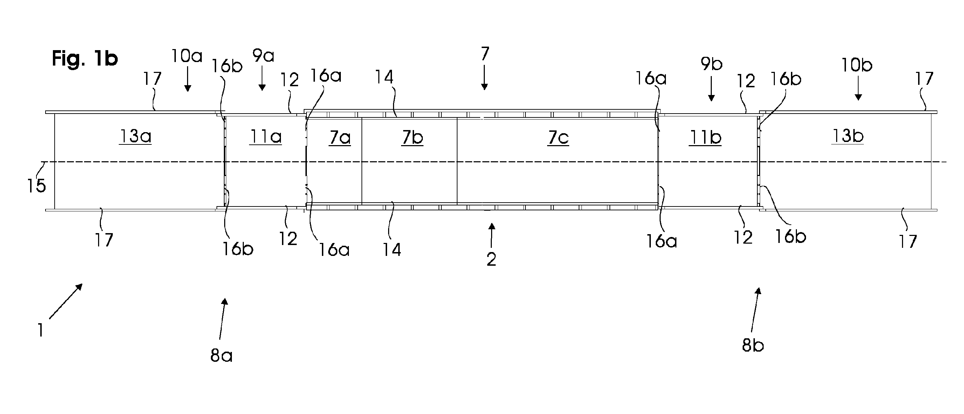

Die Figuren 1a und 1b zeigen eine mobile Fahrbahneinheit 1 für Zweiräder in einer schematischen Ansicht. Während Fig. 1a die Fahrbahneinheit 1 in einer perspektivischen Ansicht zeigt, ist in Fig. 1b eine Draufsicht der Fahrbahneinheit 1 gezeigt, wobei die Fahrbahneinheit 1 in beiden Figuren in einer Gebrauchsposition dargestellt ist, d. h. sie kann entlang einer Längsachse, welche vorliegend auch als Fahrrichtung 15 (vgl . Fig. 1b) bezeichnet ist, mit einem Zweirad, wie bspw. einem Pedelec, befahren werden.

Die Fahrbahneinheit 1 kann bspw. als Teil eines Test- oder Wettkampfparcours für Zweiräder verwendet werden. Hierzu ist es bspw. denkbar, die Fahrbahneinheit 1 zusammen mit einer auf einem Parkplatz abgesteckten Fahrstrecke als geschlossener Parcours einzusetzen, um die Strecke abwechslungsreich mit einer Steigung und einem Gefälle auszubilden. Ebenso können mehrere Fahrbahneinheiten 1 miteinander verbunden werden (nicht gezeigt), um einen entsprechenden Parcours zu bilden.

Die Fahrbahneinheit 1 weist eine mobile bzw. fahrbare Grundeinheit 2 sowie eine erste Rampenanordnung 8a und eine zweite Rampenanordnung 8b auf, die schwenkbar mit der Grundeinheit 2 verbunden sind. Hierdurch ist es möglich, die Rampenanordnungen 8a, 8b in eine Transportposition zu verstellen, in der die Fahrbahneinheit 1 leicht transportiert werden kann.

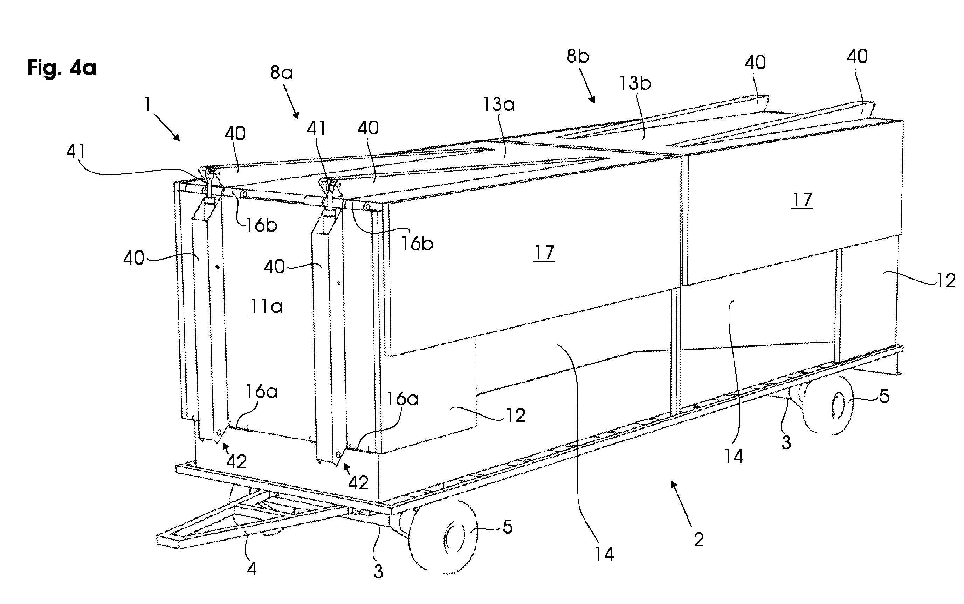

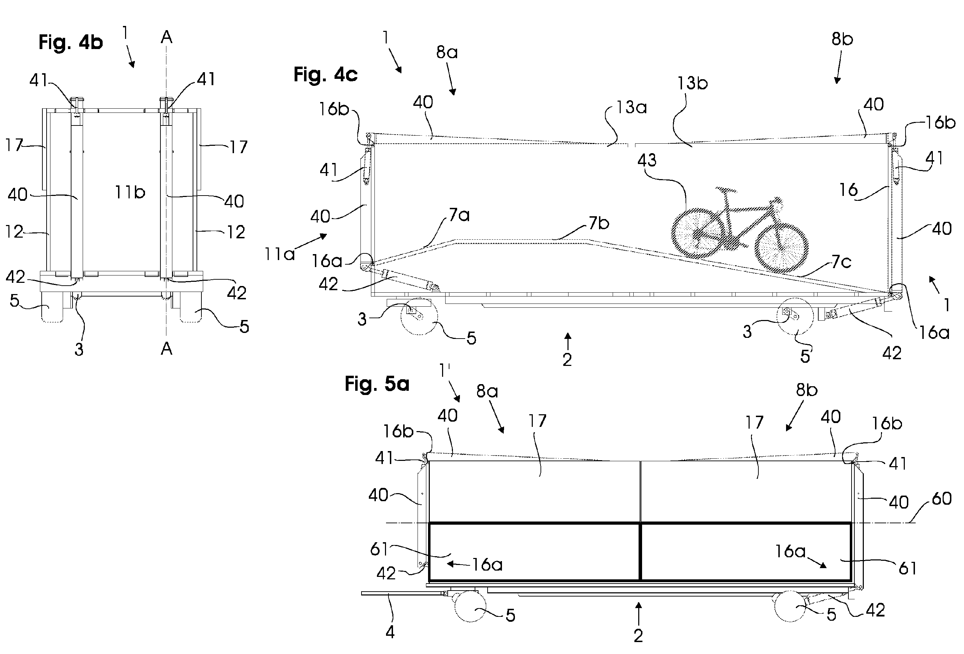

Wie gezeigt, ist die mobile Fahrbahneinheit 1 als Anhänger ausgebildet; die Grundeinheit 2 ist entsprechend integral mit einem Fahrwerk mit zwei Achsanordnungen 3 ausgebildet. Jede Achsanordnung 3 ist mit zwei üblichen PKW-Rädern 5 bestückt. Zur Verbindung eines Zugfahrzeuges ist eine Deichsel 4 vorgesehen, wie insbesondere aus Fig. 4a ersichtlich, welche die Fahrbahneinheit 1 in der Transportposition zeigt. Die Deichsel 4 ist mit einer üblichen Kugelpfanne (nicht gezeigt) zur Verbindung mit einer Kfz-Anhängerkupplung ausgelegt.

Die Grundeinheit 2 weist neben dem Fahrwerk eine längliche Fahrbahnfläche 7 auf. Die Fahrbahnfläche 7 ist hierbei durch drei Abschnitte 7a, 7b und 7c gebildet (vgl. Fig. 1b), die in unterschiedlichen Winkeln zueinander bzw. zur Horizontalen angeordnet sind, wie bspw. in Fig. 1a angedeutet. Die Fahrbahnfläche 7 weist somit ein vertikales Höhenprofil auf, was insbesondere für einen Testparcours vorteilhaft ist. Die Fahrbahnfläche 7 besteht gemäß des vorliegenden Beispiels aus Aluminiumprofilplatten, wobei die Oberfläche der Platten besandet ausgeführt ist, um auch bei ungünstigem Wetter eine ausreichende Haftung zwischen Fahrbahn und Rad zu gewährleisten. Seitlich der Fahrbahnfläche 7 angeordnete flächige Absperrelemente 14 dienen als Absturzsicherung. Um ein möglichst geringes Gewicht der Grundeinheit 2 zu gewährleisten, sind die Absperrelemente 12 als folienbespannte Aluminiumrahmen ausgebildet.

Die Fahrbahnfläche 7 bildet zusammen mit der ersten Rampenanordnung 8a und der zweiten Rampenanordnung 8b eine mit einem Zweirad befahrbare Bahn, wie bereits eingangs erwähnt. Je nach Anwendung kann hierbei bspw. die erste Rampenanordnung 8a als Auffahrrampe und die zweite Rampenanordnung 8b als Abfahrrampe dienen. Die erste Rampenanordnung 8a und die zweite Rampenanordnung 8b sind entlang der Längsachse 15 an der Grundeinheit 2 gegenüberliegend angeordnet, wie insbesondere aus der Draufsicht gemäß Fig. 1b ersichtlich.

Aufgrund des vertikalen Höhenprofils der Fahrbahnfläche 7 und des dadurch bedingten asymmetrischen Aufbaus der Grundeinheit 2 sind die Rampenanordnungen 8a, 8b nicht vollständig identisch, sondern unterscheiden sich insbesondere in den Abmessungen der einzelnen Abschnitte 9a, 10a gegenüber 9b, 10b entlang der Längsachse 15. Der grundsätzliche Aufbau entspricht sich jedoch.

Die Rampenanordnungen 8a, 8b sind zweiteilig mit je einem inneren Rampenabschnitt 9a, 9b und einem äußeren Rampenabschnitt 10a, 10b gebildet. Hierbei sind die inneren Rampenabschnitte 9a, 9b über Drehgelenke 16a schwenkbar mit der Grundeinheit 2 verbunden. Die äußeren Rampenabschnitte 10a, 10b sind über entsprechende Drehgelenke 16b mit den inneren Rampenabschnitten 9a, 9b der jeweiligen Rampenanordnung 8a, 8b schwenkbar verbunden. Die innere Rampenabschnitte 9a, 9b weisen innere Rampenflächen 11a, 11b und äußeren Rampenabschnitte 10a, 10b entsprechend äußere Rampenflächen 13a, 13b auf. Die Rampenflächen 11a, 11b, 13a, 13b sind als besandete Aluminiumprofilplatten ausgeführt; um die Stabilität zu erhöhen sind unterseitige Verstärkungsrippen 40 (vgl. bspw. Fig. 4a) vorgesehen.

Wie gezeigt, sind die Rampenabschnitte 9a, 9b sowie 10a, 10b U-förmig mit zugeordneten Absperrelementen 12,17 ausgebildet, die auch hier als Abstutzsicherung dienen.

Während die Fig. 1a und 1b die mobile Fahrbahneinheit 1 in der Gebrauchsposition zeigen, ist in den Fig. 4a - 4c die mobile Fahrbahneinheit 1 in der Transportposition gezeigt. Die mobile Fahrbahneinheit 1 lässt sich in dieser Position in vorteilhafter Weise leicht transportieren.

Zur Betätigung der Rampenanordnungen 8a, 8b sind Hydraulikzylinder 41, 42 vorgesehen, wie sich insbesondere der Schnittansicht der Fig. 4c entnehmen lässt. Die Betätigung erfolgt über eine mit einer Bedieneinheit ausgerüstete Steuerungseinrichtung (nicht gezeigt), welche in der Grundeinheit 2 unterhalb der Fahrbahnfläche 7 angeordnet ist. Die Steuerungseinheit betätigt ein Hydraulikaggregat (nicht gezeigt), welches über entsprechende Ventile die einzelnen Hydraulikzylinder 41, 42 ansteuert. Die Position der Rampenelemente 9, 10 wird über entsprechende, bspw. an den Rampenflächen 11a, 11b, 13a, 13b angeordnete Mikro- bzw. Endschalter detektiert.

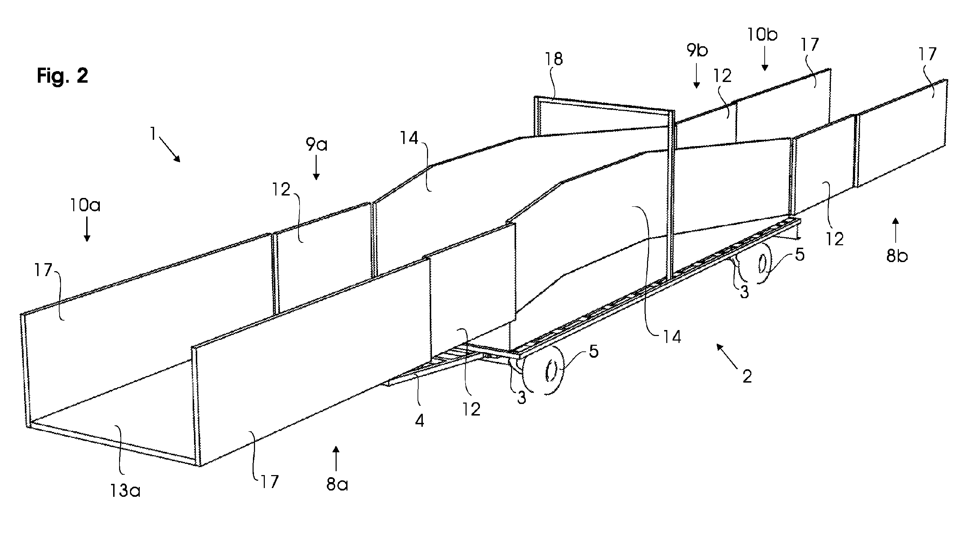

Der Bewegungsablauf zum Verstellen der Rampenanordnungen 8a, 8b von der Gebrauchsposition in die Transportposition wird nachfolgend mit Bezug auf die Fig. 2-4 erläutert. Hierbei kann die Betätigung der Rampenanordnungen 8a, 8b grundsätzlich gleichzeitig erfolgen, was in den Figuren 2-4 dargestellt ist, ebenso ist es jedoch auch möglich, die Rampenanordnungen 8a, 8b nacheinander aus der Gebrauchsposition in die Transportposition und umgekehrt zu bringen.

Wie in Fig. 2 gezeigt, werden die Rampenanordnungen 8a, 8b zunächst Horizontal um die Drehachsen der Gelenke 16a verschwenkt. Während die erste Rampenanordnung 8a hierzu um ca. 10° verschwenkt wird, beträgt der entsprechende Winkel bei der zweiten Rampenanordnung 8b aufgrund der Asymmetrie der Grundeinheit 2 ca. 7°. Hierzu werden die zwischen den inneren Rampenabschnitten 9 und der Grundeinheit 2 vorgesehenen Hydraulikzylinder 42 betätigt. Eine Stützbrücke 18 wird manuell eingesetzt, welche die äußeren Rampenabschnitte 10 in der Transportposition aufnimmt, wie im Nachfolgenden noch detailliert erläutert wird.

Damit die Rampenanordnungen 8a, 8b problemlos von der Gebrauchsposition in die Transportposition verschwenkt werden können, sind die Abstände der Absperrelemente 14, 12, 17 zueinander "gestaffelt" angeordnet, d. h. der Abstand der Absperrelemente 17 der äußeren Rampenabschnitte 10 zueinander, d.h. quer zur Längsachse 15 ist größer als der Abstand der Absperrelemente 12 der inneren Rampenabschnitte 9. Entsprechend ist der Abstand der Absperrelemente 12 zueinander größer als der Abstand der Absperrelemente 14. Die gestaffelte Anordnung ist insbesondere aus Fig. 1b ersichtlich.

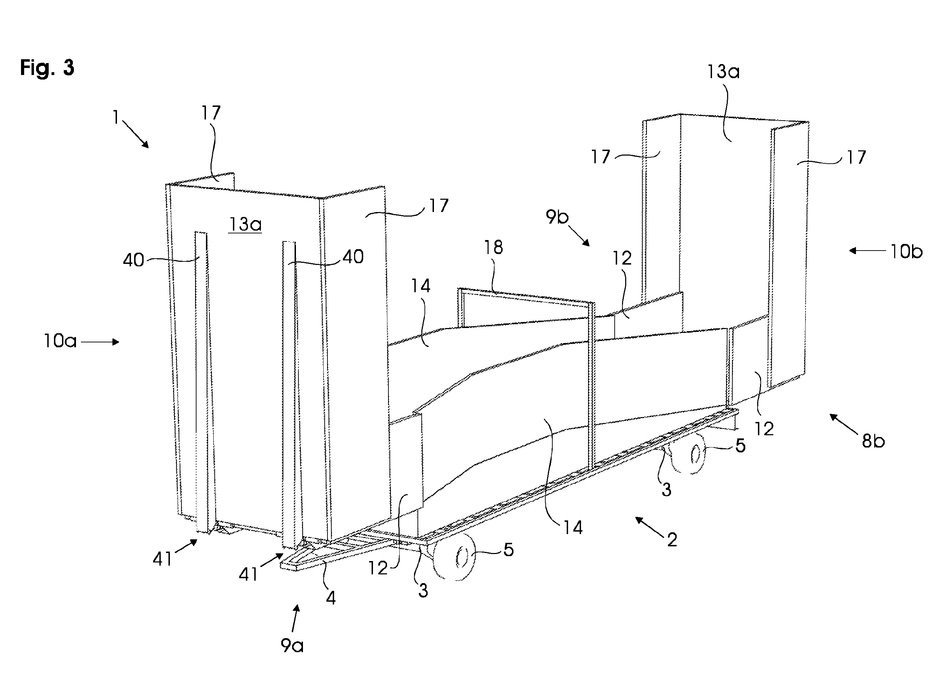

Nachdem die Rampenanordnungen 8a, 8b horizontal verschwenkt wurden, werden anschließend die äußeren Rampenabschnitte 10 vertikal um die Drehachse der Gelenke 16b um 90° verschwenkt. Hierzu werden die Hydraulikzylinder 41 über die Steuerungseinrichtung betätigt. Die äußeren Rampenflächen 13a sind nun in einer vertikalen Position, wie in Fig. 3 gezeigt.

Anschließend werden nochmals die Hydraulikzylinder 42 von der Steuerungseinrichtung betätigt, die zwischen den inneren Rampenabschnitten 9 und der Grundeinheit 2 angeordnet sind. Hierdurch werden die Rampenanordnungen 8a, 8b insgesamt um die Drehachse der Gelenke 16a um 90° verschwenkt. Die mobile Fahrbahneinheit 1 befindet sich nun in der Transportposition, wie in den Fig. 4a - 4c dargestellt.

Wie gezeigt, sind die äußeren Rampenabschnitte 10 nunmehr derart verschwenkt, dass die äußeren Rampenflächen 13a, 13b horizontal angeordnet sind und auf der Stützbrücke 18 aufliegen. Die inneren Rampenflächen 11a, 11b bilden zusammen mit den Absperrelementen 12, 14_{,} 17 seitliche Bordwände. Zwischen den Rampenflächen 11, 13 ist somit ein abgeschlossener Transportraum gebildet.

Die mobile Fahrbahneinheit 1 lässt sich in dieser Lage leicht transportieren, wobei der Transportraum im Inneren zur Unterbringungen von bspw. einem oder mehreren Pedelecs 43 genutzt werden kann.

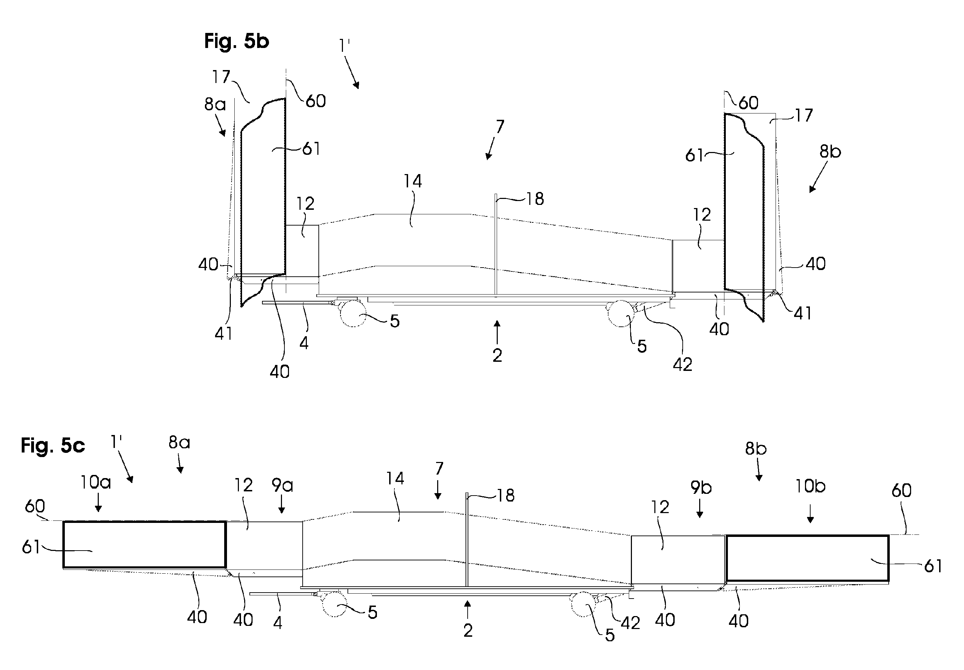

Ein zweites Ausführungsbeispiel der erfindungsgemäßen mobilen Fahrbahneinheit 1 ist in einer schematischen Seitenansicht in den Fig. 5a-5c gezeigt. Der Aufbau der mobilen Fahrbahneinheit 1' entspricht im Wesentlichen dem zuvor mit Bezug zu den Fig. 1-4 erläuterten Ausführungsbeispiel. Gegenüber dem zuvor beschriebenen Ausführungsbeispiel sind jedoch zwei zusätzliche Abdeckplanen 61 vorgesehen, die um eine Drehachse 60 schwenkbar an den Absperrelementen 17 der äußeren Rampenelemente 10a, 10b angeordnet ist.

Wie in Fig. 5a gezeigt, decken die Abdeckplanen 61 den unteren Bereich der Grundeinheit 2 in der Transportposition ab und können auf der sichtbaren Außenseite bspw. zur Aufnahme einer Beschriftung dienen. Beim Verschwenken der Rampenelemente 8a, 8b in die Transportposition verbleiben diese an den Absperrelementen 17 und schwenken hierbei während der Verstellung von der Transportposition in die Gebrauchsposition um, so dass nunmehr in der Gebrauchsposition die Innenseite der Abdeckplanen 61 sichtbar ist und eine zweite Beschriftung zulässt.

Die Erfindung wurde vorstehend anhand der Ausführungsbeispiele mit Bezug auf die Figuren erläutert. Die Ausführungsbeispiele erlauben naturgemäß zahlreiche Änderungen oder Ergänzungen. Beispielsweise ist es denkbar, dass
- anstelle eines Hydraulikantriebs für die Rampenanordnungen 8a, 8b ein elektrischer Antrieb oder eine manuelle Betätigung vorgesehen ist,
- die Fahrbahnfläche 7 anstelle der Ausbildung mit verschiedenen Abschnitten 7a, 7b, 7c im Wesentlichen eben ausgebildet ist,
- die Grundeinheit 2 symmetrisch aufgebaut ist und/oder
- die Rampenflächen 11a, 11b, 13a, 13b und die Fahrbahnfläche 7 mit weiteren, ggf. voneinander abweichenden Oberflächenbelägen ausgebildet sind.

## Patentansprüche

1. Mobile Fahrbahneinheit für Zweiräder, mit mindestens
- einer Grundeinheit (2) mit einer Fahrbahnfläche (7) und
- einer ersten (8a) und einer zweiten (8b) mit der Grundeinheit (2) verbundenen Rampenanordnung mit jeweils mindestens einer Rampenfläche, wobei
- die erste (8a) und die zweite Rampenanordnung (8b) von einer Transportposition in eine Gebrauchsposition verstellbar ist und wobei in der Gebrauchsposition die Rampenflächen und die Fahrbahnfläche (7) eine befahrbare Bahn bilden.

2. Mobile Fahrbahneinheit nach Anspruch 1, wobei die Grundeinheit rollbar ausgebildet ist.

3. Mobile Fahrbahneinheit einem der vorangehenden Ansprüche, wobei die Grundeinheit (2) als Anhänger zur Verbindung mit einem Zugfahrzeug ausgebildet ist.

4. Mobile Fahrbahneinheit nach einem der vorangehenden Ansprüche, wobei die erste (8a) und die zweite Rampenanordnung (8b) entlang einer Längsachse der Grundeinheit (2) gegenüberliegend an der Fahrbahnfläche (7) angeordnet sind.

5. Mobile Fahrbahneinheit einem der vorangehenden Ansprüche, wobei die erste (8a) und/oder die zweite Rampenanordnung (8b) um eine erste, zu einer Längsachse der Grundeinheit (2) senkrechte Drehachse von der Transportposition in die Gebrauchsposition schwenkbar ist.

6. Mobile Fahrbahneinheit nach einem der vorangehenden Ansprüche, wobei die erste (8a) und/oder die zweite Rampenanordnung (8b) mindestens einen inneren (9a, 9b) und einen äußeren Rampenabschnitt (10a, 10b) aufweist, wobei der innere Rampenabschnitt (9a, 9b) verstellbar mit der Grundeinheit (2) und der äußere Rampenabschnitt (10a, 10b) verstellbar mit dem inneren Rampenabschnitt (9a, 9b) verbunden ist.

7. Mobile Fahrbahneinheit nach Anspruch 6, wobei der äußere Rampenabschnitt (10a, 10b) um eine zweite Drehachse schwenkbar ist und wobei die zweite Drehachse parallel zur ersten Drehachse ist.

8. Mobile Fahrbahneinheit nach einem der Ansprüche 6 oder 7, wobei der innere Rampenabschnitt (9a, 9b) eine innere Rampenfläche (11a, 11b) und der äußere Rampenabschnitt (10a, 10b) eine äußere Rampenfläche (13a, 13b) aufweist und die Rampenanordnung (8a, 8b) derart ausgebildet ist, dass in der Transportposition die innere Rampenfläche (11a, 11b) im Wesentlichen vertikal und die äußere Rampenfläche (13a, 13b) im Wesentlichen horizontal angeordnet ist, so dass zwischen der Fahrbahnfläche (7) und den Rampenflächen (11a, 11b, 11a, 13b) ein Transportraum gebildet ist.

9. Mobile Fahrbahneinheit nach einem der vorangehenden Ansprüche, wobei die Grundeinheit (2) und/oder die Rampenanordnungen (8a, 8b) mindestens ein Absperrelement (12, 14, 17) aufweist, welches sich im Wesentlichen senkrecht zur Fahrbahnfläche (7) bzw. Rampenfläche erstreckt und die befahrbare Bahn mindestens teilweise seitlich begrenzt.

10. Mobile Fahrbahneinheit nach einem der vorangehenden Ansprüche, wobei mindestens ein Antrieb für die Rampenanordnungen (8a, 8b) vorgesehen ist.
